# EUROPEAN PATENT SPECIFICATION

(11) **EP 0 602 054 B1**
(45) Date of publication and mention of the grant of the patent: **09.12.1998**
(21) Application number: 92916082.8
(22) Date of filing: 31.07.1992
(51) Int. Cl.: B60T 7/20

(54) **TRACTION DEVICE**
ZUGVORRICHTUNG
DISPOSITIF DE TRACTION

(30) Priority: 02.08.1991 SE 9102278
(43) Date of publication of application: 22.06.1994
(73) Proprietor: SJÖLUND, Anders, S-921 34 Lycksele (SE); FORSGREN, Stellan, S-921 41 Lycksele (SE)
(72) Inventor: SJÖLUND, Anders, S-921 34 Lycksele (SE); FORSGREN, Stellan, S-921 41 Lycksele (SE)
(74) Representative: Onn, Thorsten
(86) International application number: SE9200531
(87) International publication number: WO9302899

(56) References cited:
- GB-A- 2 084 269
- US-A- 2 145 406
- US-A- 2 662 616
- US-A- 2 729 309
- US-A- 4 239 252

## Description

This invention relates to a draw device intended to be arranged at the fore part of the draw bar of a trailer, towed by a vehicle, and comprising a socket hitch which is intended to be fastened on the tow hook of the vehicle, the draw device being intended to act upon the brakes of the trailer.

According to known technique trailers for non-heavy vehicles are provided with a braking device which is intended to be influenced by means of a draw bar of the trailer. In that connection the draw bar is so arranged that its fore part is displacebly journalled in relation to the remaining part of the draw bar essentially in the longitudinal direction of this one. The fore part of the draw bar acts upon the brakes of trailer either in a hydraulic way or in a mechanical way.

Due to the weight of the trailer, the draw bar rests against the tow hook of the vehicle with a certain force. This force can vary in dependence upon the load of the trailer. In case of heavy load on the trailer, the draw bar may have such a strong contact with the tow hook of the vehicle that the bar is bent. Due to that fact the relative movement between the parts of the draw bar is deterioated during the retardation of the vehicle. If the vehicle is retarded strongly, this fact may lead to that at first nothing happens regarding the retardation of the trailer due to the difficulties for the mutual movement of the parts of the draw bar. Then there is a violent retardation of the trailer due to the fact that the parts of the draw bar suddenly overcome the resistance against the relative movement between the parts so that the fore part of the draw bar suddenly with full force acts upon the brakes of the trailer. This retardation of the trailer can be so strong that the trailer begins to skid och causes a critical situation for the driver of the vehicle.

By the American patent No. 2 729 309 is previously known a draw device according to the preamble of claim 1.

An essential draw back with this known device is the fact that the socket hitch is positioned under the pivoting pin. When retarding, this means that the socket hitch will move downwards and backwards. However, this movement will be counteracted by the fact that the rear portion of the draw vehicle with the tow hook gets a movement which is directed upwards when retarding. Due to that fact the function of the draw device will not be satisfactory. Furthermore, there is no possibility to pre-set the force by which the braking system is influenced by the known device.

This invention intends to remove the problems with known technique and offer a draw device for trailers which gives a soft and effective transmission of the retardation force of the vehicle to the brakes of the trailer. This has been made possible by a draw device as defined by the characterising features of claim 1.

The constructive design of the new draw device means that that part of the socket hitch being in engagement with the tow hook of the draw vehicle in an active position will place itself essentially straight above the hinge. Thus, if the socket hitch is made longer or is moved forwards in she device, which means that the socket hitch in an inactive position is displaced in front of the hinge, the force on the brakes will be strengthened. On the other hand, if the socket hitch is made shorter or is moved backwards in the device, which means that the socket hitch in an inactive position is displaced inside the hinge, the force on the brakes will be weakened.

A further advantage with the new draw device is the fact that when retarding a trailer provided with a draw device according to the invention, the movement directed downwards of the draw device, arising during the retardation, creates a force which strengthens the braking force by which the braking system of the trailer is influenced.

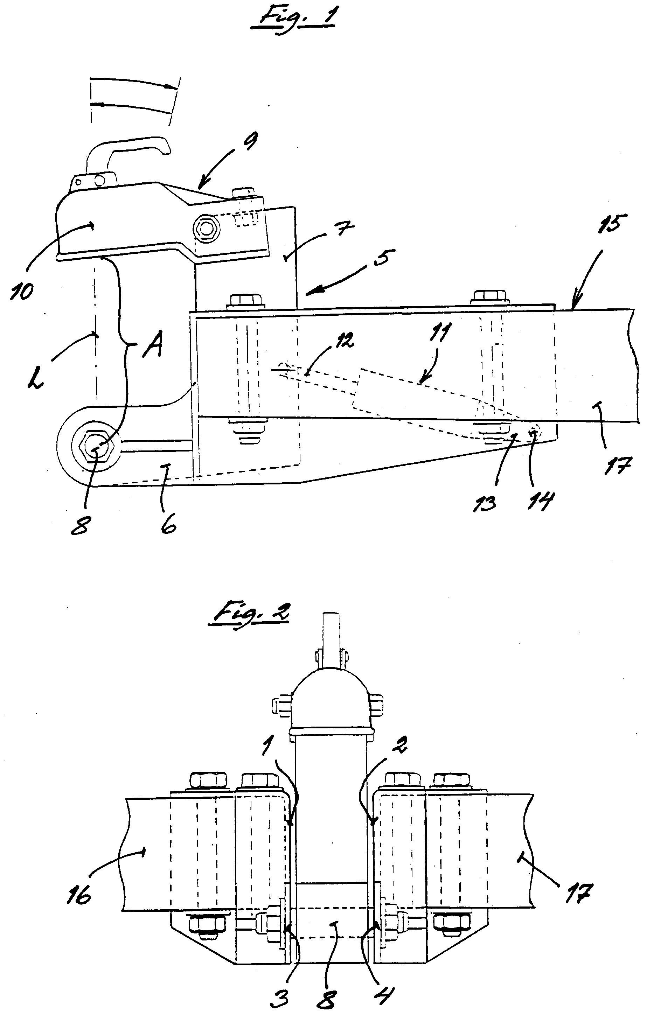

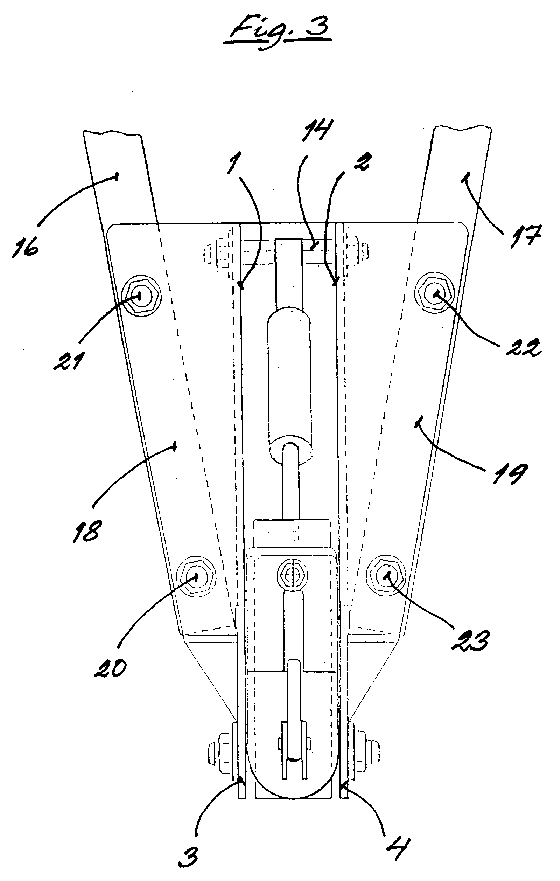

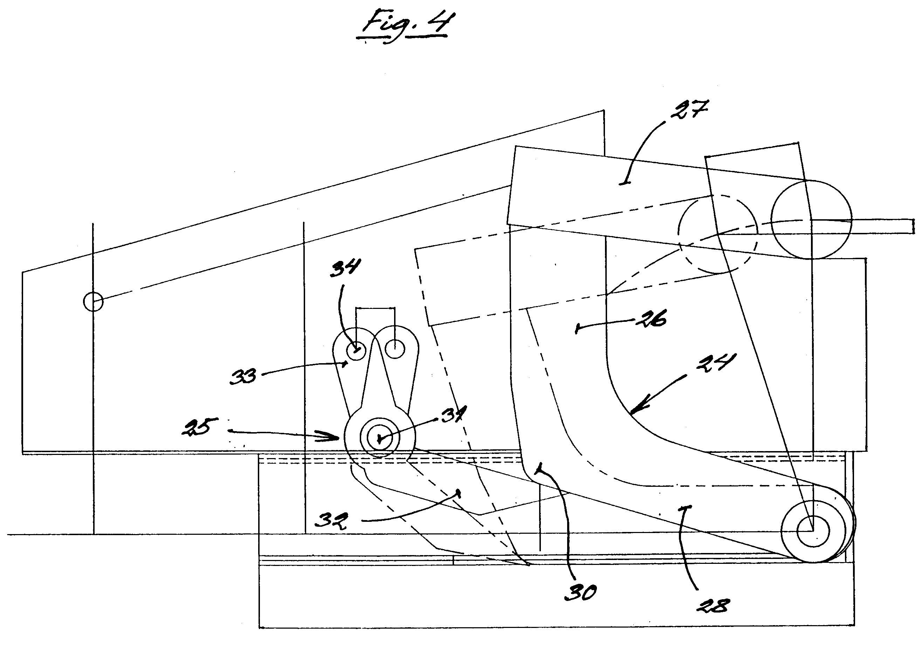

Two preferred embodiments of the invention shall be described more closely below with reference to the accompanying drawings, in which Fig. 1 shows a side view of a first embodiment of the draw device according to the invention, this one being shown fastened on the fore part of a draw bar of a trailer, Fig. 2 shows a view of the device according to Fig. 1, seen from the front, Fig. 3 shows a view of the device according to Fig. 1, seen from above, and Fig. 4 schematically shows a second embodiment of the draw device according to the invention.

Referring to the Figs. 1-3 is shown there the first embodiment of the invention which is intended for trailers with a hydraulic braking system. The embodiment comprises two essentially vertical, parallel side walls 1, 2, which are positioned at a certain distance from each other so that a lateral space is created between these ones. When mounting the side walls 1, 2 on the draw bar of the trailer, these ones have a direction which is essentially the same as the longitudinal direction of the trailer. From respective side wall 1, 2 a portion 3, 4 projects straight forwards in such a way that between these two parts 3, 4 is also created a space, the lateral size of which essentially corresponds to the lateral size of the space between the side walls 1, 2. With the lateral size of a space is meant the width of the space in a direction which is essentially perpendicular to the longitudinal direction of the draw device. In these spaces between the portions 3, 4 and the side walls 1, 2 there is an angle bar-like means 5 (yoke) intended to be pivotably suspended. This means comprises an essentially straight and horizontal part 6 which is directed forwards and an essentially straight and vertical part 7 which is directed upwards. In this connection the fore portion of the horizontal part 6 is pivotably fastened on an essentially horizontal shaft 8 which is arranged at the projecting portions 3, 4 of the draw device. In the upper portion of the vertical part 7 the rear part of a socket hitch 9 is fastened. This socket hitch which in normal position has essentially a horizontal extension, is accordingly directed forwards, that part 10 of the socket hitch which is intended to be in engagement with the tow hook of the vehicle, is arranged essentially straight above the shaft 8, forming the hinge of the means 5 of the socket hitch 9, and at a vertical distance A from this one. This distance A shall be so large that the tow hook and possibly the base of this one shall be able to be freely applied between the projecting portions 3, 4 of the tow hook and the socket hitch.

As appears from the drawing the socket hitch 9 and the means 5 shall be able to be pivoted backwards a number of degrees and back to the original position, pivoting being made about the shaft 8. This pivoting is limited according to this embodiment by the piston stroke of a hydraulic piston cylinder 11, the one end 12 of which is articulatedly fastened to the vertical part 7 of the means 5, whereas the other end 13 of the piston cylinder is articulatedly fastened to an essentially horizontal shaft 14 which is arranged between the side walls 1, 2 in a rear part of the draw device. The piston cylinder is so arranged that in resting position it is directed obliquely upwards, seen from behind and forwards. This means that when the means 5 has been pivoted a number of degrees in a clockwise direction, seen in Fig. 1, the angle between the part 7 of the means 5 and the longitudinal direction of the hydraulic cylinder will be about 90°. During the continued pivoting of the means 5, the pivoting movement of this means, seen a the point 12 of the front attachment means of the piston cylinder, will have a direction which approximately corresponds to the longitudinal direction of the piston cylinder. This fact leads to a very effective transmission of the force from the socket hitch 9 and the means 5 to the piston cylinder 11.

The device functions in the following way:

A trailer provided with a new draw device is coupled to a vehicle, the socket hitch 9 being fastened on the tow hook of the vehicle. When retarding the vehicle, the socket hitch is forced backwards. This fact leads to an immediate reaction of the means 5 which begins to pivot in the clockwise direction about the shaft 8. Due to that fact the hydraulic piston 11 is pressed together, whereby hydraulic oil is forced out into the braking pipes leading oil to the brakes of the trailer. Due to the design of the device, according to the invention, there is a very soft transmission of the retardation movement of the vehicle to the trailer and its braking device. This soft transmission of the force is made independently of the weight of the load of the trailer. Due to that fact the risk is removed that troublesome situations shall arise for the driver of the vehicle.

The described draw device is, as has previously been mentioned, intended to be placed at the fore part of the draw bar 15 of the trailer. This draw bar 15 suitably comprises two parts 16, 17, which diverge in relation to each other in the direction backwards. For fastening the parts 16, 17 of the draw bar the draw device is provided with two essentially horizontal side flanges 18, 19, one side flange projecting out essentially perpendicularly from the upper portion of respective side wall 1, 2. Of course it would be possible to modify the device so that the side flange instead projects out from the lower portion of respective side wall. In order to be adapted to the diverging parts 16, 17 of the draw bar, the width measure of each flange 18, 19 increases in the direction backwards. The draw bar is suitably fastened by means of bolts 20, 23 on the parts 16, 17 of the draw bar.

The described embodiment according to Figs. 1-3 is intended to be used in trailers provided with a hydraulic braking system. In Fig. 4, however, is shown an embodiment of the invention which is intended to be used in trailers provided with mechanically influenced brakes, i.e. brakes which are influenced for instance by tightening a steel wire or the like. The draw device for trailers with mechanical brakes has the same principle design as the draw device for trailers with hydraulic brakes. The difference is that the angle bar-like means (yoke) 24 in Fig. 4 is intended to influence a mechanical, pivoting means 25, whereas the angle bar-like means in the embodiment according to Figs. 1-3 is intended to influence a hydraulic cylinder.

The angle bar-like means 24 in Fig. 4 comprises two parts, one essentially straight, vertical part 26 which at the top is connected with the schematically shown socket hitch 27, and a straight, almost horizontal lower part 28, the fore portion of which is pivotably fastened on an essentially horizonal shaft 29. The transition area between the vertical part 26 and the essentially horizontal lower part 28 forms a corner-formed portion 30. This portion 30 is intended to cooperate with the pivoting means 25, which is pivotably fastened on an essentially horizontal shaft 31 and has a portion 32, 33 on each side of the shaft 31. In that connection the one portion 32 is elongated and pointed and is intended to be in contact with the corner-formed portion 30 of the anglebar-like means 24 (yoke). The portion 33 of the means 25 on the other side of the shaft 31 is also elongated and has a hole 34 in which the means for the mechanical influence of the brakes of the trailer can be fastened.

By changing the form of the corner-formed portion 30 of the means 24 and of the portions 32, 33 of the means 25 the gear between the means 24 and 25 can be changed.

When retarding a trailer provided with a draw device according to Fig. 4, the socket hitch 27 is removed backwards, whereby the angle bar-like means 24 is pivoted in the counter-clockwise direction about the shaft 29 constituting the hinge. In that connection the corner-formed portion 30 of the means 24 influences the portion 32 of the pivoting means 25 so that this means pivots in the clockwise direction about the shaft 31 constituting the hinge. Due to that fact a wire or the like, which is connected with upper portion 33 of the pivoting means 25 is tightened. This has the consequence that the brakes are engaged mechanically on the trailer.

An extremely essential advantage with the draw device according to the invention is the possibility of presetting the force by which the braking system of the trailer can be influenced. This has been made possible by the constructive design of the new draw device meaning that the fastening point of the socket hitch is above the pivoting point of the yoke. Due to that fact in an active drawing position always a centering of the fastening point is made in relation to the pivoting point so that the former one becomes positioned straight above the later one which is indicated by a dotted, vertical line L in Fig. 1.

The invention is of course not limited to the embodiments which have been described here but can be modified within the scope of the following claims. Thus, if the traffic legislation of any country should require that, the device could be provided with a shock absorbing means in order that the force from the vehicle to the trailer shall be transmitted still softer. A suitable placing of such a shock absorbing means would be to arrange its one end in the upper portion of the vertical part 7; 26 of the angle bar-like means 5; 24 and the other end of theshock ab-sorbing means on a shaft which is positioned between the side walls 1, 2.

## Claims

1. Draw device intended to be arranged at the fore part of a draw bar of a trailer, towed by a vehicle, and comprising a socket hitch which is intended to be fastened on the tow hook of the vehicle, the draw device being intended to act upon the brakes of the trailer, the socket hitch (9; 27) being fastened to the fore part of the draw device by means of a hinge (8; 29) in such a way that the socket hitch (9; 27) can be pivoted essentially in a vertical plane backwards in relation to the draw device, the movement backwards of the socket hitch (9; 27) creating a force which is transmitted to the brakes of the trailer for retardation of the same, **characterized** by the combination of the following features:
- It comprises an anglebar-like means (5; 24) with an upper part (7; 26) and a lower part (6; 28), the upper part extending essentially vertically and the socket hitch (9; 27) being arranged in the upper portion of the upper part, and the lower part extending forwards in the draw device, and the fore portion of the lower part being pivotally fastened on an essentially horizontal shaft (8; 29), arranged in the draw device and constituting the hinge of the socket hitch;
- The anglebar-like means (5; 24) has such a design and is so arranged that in an active traction position that part of the socket hitch (9; 27), which is in engagement with the tow hook of the vehicle is positioned essentially directly above the shaft (8; 29).

2. Draw device according to claim 1, **characterzed** in that it comprises two essentially vertical, parallel side walls (1, 2) which are positioned at a distance from each other, seen in a direction which is essentially perpendicular to the longitudinal direction of the draw device, a part (3, 4) projeting essentially straight forwards from respective side wall (1, 2), whereby there is created a space between the side walls (1, 2) and the parts (3, 4), respectively, and that the anglebar-like means (5; 24) is arranged in the mentioned space.

3. Draw device according to claim 1 or 2, the draw device being intended to be used in a trailer provided with hydraulic brakes, **characterized** in that the socket hitch (9) and by that the means (5) on which the socket hitch (9) is arranged, are intended to influence a hydraulic piston cylinder (11) which via brake pipes are in contact with the brakes of the trailer, the one end (12) of the piston cylinder (11) being articulatedly fastened to the vertical part (7) of the means (5), whereas the other end (13) of the piston cylinder is articulatedly fastened on an essentially horizontal shaft (14) which is arranged between the side walls (1, 2) in a rear part of the draw device.

4. Draw device according to claim 1 or 2, the draw device being intended to be used in a trailer provided with mechanical brakes, **characterized** in that the socket hitch (27) and by that the means (24), on which the socket hitch is arranged, are intended to influence a pivoting means (25) which in its turn is intended to be connected with a means for mechanical action upon the brakes of the trailer.

5. Draw device according to claim 4, **characterized** in that the pivoting means (25) is pivotally fastened on an essentially horizontal shaft (31), arranged between the side walls (1, 2), and that the means (25) on the one side of the shaft (31) has a lower elongated portion (32) which is intended to be in contact with a corner-formed portion (30) of the angle-bar-like means (24) between its upper (26) and lower part (28), and an upwards projecting portion (33) on the other side of the shaft (32), which portion (33) is intended to be connected with the means acting upon the brakes of the trailer.

6. Draw device according to claim 5, **characterized** in that when retarding the draw vehicle, the anglebar-like means (24) is pivoted in a counter clockwise direction about the first shaft (29) and influences the pivoting means (25) to pivot in a clockwise direction about the second shaft (31), the gear between the movements of the two means (24, 25) being able to be changed by modification of the corner-formed portion (30) of the first means (24) and the projecting portions (32, 33) of the second means (25).

7. Draw device according to any one of the preceding claims, the draw device being intended to be fastened on a draw bar (15) of a trailer, **characterized** in that the fastening is made by means of flanges (18, 19) and anchoring means (20-23).

## Patentansprüche

1. Zugvorrichtung zum Anbringen am Vorderteil der Deichsel eines von einem Fahrzeug gezogenen Anhängers, welche einen Kupplungsanbau aufweist, der mit dem Zughaken des Fahrzeugs verbindbar ist, wobei die Zugvorrichtung zur Einwirkung auf die Bremsen des Anhängers bestimmt ist und der Kupplungsanbau (9; 27) mittels eines Scharniers (8; 29) am Vorderteil der Zugvorrichtung derart befestigt ist, dass der Kupplungsanbau (9; 27) in einer im wesentlichen sankrechten Ebene bezuglich der Zugvorrichtung nach hinten schwenkbar ist und diese Rückwärtsbewegung des Kupplungsanbaus (9; 27) eine Kraft erzeugt, die zwecks Bremsung des Anhängers auf dessen Bremsen übertragen wird, gekennzeichnet durch die Kombination der folgenden Merkmale:
- die Zugvorrichtung weist ein winkelhebelähnliches Element (5; 24) mit einem Oberteil (7; 26) und einem Unterteil (6; 28) auf, wobei sich das Oberteil im wesentlichen senkrecht erstreckt und an seinem oberen Bereich mit dem Kupplungsanbau (9; 27) verbunden ist und sich das Unterteil nach vorn in die Zugvorrichtung erstreckt, wobei der vordere Bereich des Unterteils schwenkbar an einer im wesentlichen horizontalen Achse (8; 29) befestigt ist, die in der Zugvorrichtung angeordnet ist und das Scharnier des Kupplungsanbaus darstellt;
- das winkelhebelähnliche Element (5; 24) ist derart ausgelegt und angeordnet, dass sich bei einer aktiven Zugstellung derjenige Teil des Kupplungsanbaus (9; 27), der in Eingriff mit dem Zughaken des Fahrzeugs steht, im wegentlichen unmittelbar oberhalb der Achse (8; 29) befindet.

2. Zugvorrichtung nach Anspruch 1, dadurch gekennzeichnet, dass sie zwei im wesentlichen vertikale, parallele Seitenwandungen (1, 2) aufweist, die in einer senkrecht zur Längsrichtung der Zugvorrichtung verlaufenden Richtung im Abstand voneinander angeordnet sind, und dass sich ein Bereich (3, 4) der Seitenwandungen (1, 2) im wesentlichen gerade nach vorn erstreckt und dadurch ein Zwischenraum gebildet wird, in welchem das winkelhebelähnliche Element (5; 24) angeordnet ist.

3. Zugvorrichtung nach Anspruch 1 oder 2, zur Verwendung in Anhängern mit Hydraulikbremsen, dadurch gekennzeichnet, dass der Kupplungsanbau (9) und damit das Element (5), an welchem der Kupplungsanbau (9) angeordnet ist, zur Beeinflussung eines Hydraulikzylinders (11) eingerichtet sind, der über Bremsleitungen mit den Anhängerbremsen in Verbindung steht, wobei das eine Ende (12) des Hydraulikzylinders (11) gelenkig mit dem vertikalen Teil (7) des Elements (5) verbunden ist, während das andere Ende (13) des Zylinders gelenkig an einer im wesentlichen horizontalen Achse (14) angebracht ist, die zwischen den Seitenwandungen (1, 2) im hinteren Bereich der Zugvorrichtung angeordnet ist.

4. Zugvorrichtung nach Anspruch 1 oder 2, zur Verwendung in Anhängern mit Mechanikbremsen, dadurch gekennzeichnet, dass der Kupplungsanbau (27) und damit das Element (24), an welchem der Kupplungsanbau (9) angeordnet ist, zur Beeinflussung eines schwenkbaren Bauteils (25) eingerichtet ist, welches wiederum zur Verbindung mit einem Organ zur mechanischen Einwirkung auf die Anhängerbremsen vorgesehen ist.

5. Zugvorrichtung nach Anspruch 4, dadurch gekennzeichnet, dass das schwenkbare Bauteil (25) schwenkbar auf einer im wesentlichen horizontalen, zwischen den Seitenwandungen (1, 2) angeordneten Welle (31) befastigt ist, und dass das Bauteil (25) an einer Seite der Welle (31) einen unteren, verlängerten Bereich (32) besitzt, der zum Anliegen an ein eckenartiges Teilstück (30) des winkelhebelähnlichen Elements (24) zwischen dessen Oberteil (26) und Unterteil (28) eingerichtet ist, sowie einen nach oben gerichteten Vorsprung (33) auf der anderen Seite der Welle (31), der zur Verbindung mit den Organen eingerichtet ist, die auf die Anhängerbremsen wirken.

6. Zugvorrichtung nach Anspruch 5, dadurch gekennzeichnet, dass bei einer Rückwärtsbewegung des Zugfahrzeugs das winkelhebelähnliche Element (24) im Gegenuhrzeigersinn um die erste Achse (29) verschwenkt wird und das schwenkbare Bauteil (25) zu einer Drehung im Uhrzeigersinn um die Welle (31) veranlasst, wobei die Übersetzung zwischen den Bewegungen der beiden Elemente (24, 25) durch Veränderung des eckenartigen Teilstücks (30) des ersten Elements (24) und der vorspringenden Bereiche (32, 33) des zweiten Elements (25) bewirkt werden kann.

7. Zugvorrichtung nach einem der vorstehenden Ansprüche, zur Verwendung auf einer Deichsel (15) eines Anhängers, dadurch gekennzeichnet, dass die Befestigung mittels Flanschen (18, 19) und Verankerungsmitteln (20 bis 23) bewirkt wird.

## Revendications

1. Dispositif de traction pour être arrangé à la partie antérieure d'une barre d'attelage d'une remorque qui est tractée par un véhicule, comprenant un raccordement de traction destiné à être fixé au crochet d'attelage du véhicule, le dispositif de traction étant agencé à agir sur les freins de la remorque, le raccordement de traction (9; 27) étant fixé à la partie avant du dispositif de traction moyennant une charnière (8; 29) de sorte que le raccordement de traction (9; 27) peut pivoter, dans un plan essentiellement vertical, vers l'arrière par rapport au dispositif de traction, ce mouvement vers l'arrière du raccordement de traction (9; 27) créant une force qui est transmise aux freins de la remorque afin de la freiner, caractérisé par la combinaison des particularités suivantes:
- il comprend un élément sous forme d'un levier coudé (5; 24) ayant une partie supérieure (7; 26) et une partie inférieure (6; 28), la partie supérieure s'étendant essentiellement verticalement, le raccordement de traction (9; 27) étant disposé dans ta région en haut de la partie supérieure, et la partie inférieure s'étendant vers l'avant dans la dispositif de traction, la région avant de la partie inférieure étant fixé de façon pivotante sur un arbre essentiellement horizontal (8; 29) arrangé dans le dispositif de traction et formant la charnière du raccordement de traction;
- l'élément en forme de levier coudé (5; 24) est dessiné et arrangé de telle sorte que, dans une position de traction active, la partie du raccordement de traction (9, 27) qui est en engagement avec le crochet d'attelage du véhicule, est positionnée sensiblement directement au-dessus de l'arbre (8; 19).

2. Dispositif de traction selon la revendication 1, caractérisé en ce qu'il comprend deux parois latérales (1, 2) essentiellement verticales et parallèles, positionnées à une distance l'une de l'autre, vues dans une direction qui est essentiellement perpendiculaire à la direction longitudinale du dispositif de traction, une partie (3, 4) s'étendant tout droit à partir des parois latérales (1, 2), créant ainsi un espace entre les parois latérales (1, 2) et les parties (3, 4), respectivement, et que l'élément en forme de levier coudé (5; 24) est disposé à l'intérieur de l'espace mentionné.

3. Dispositif de traction selon la revendication 1 ou 2, prévu pour être utilisé sur une remorque équipée de freins hydrauliques, caractérisé en ce que le raccordement de traction (9) et, de ce fait, l'élément (5) sur lequel le raccordement de traction est disposé, sont agencés pour influer sur un vérin hydraulique (11) qui est relié par des conduites de freinage aux freins de la remorque, un bout (12) du vérin hydraulique (11) étant articulé sur la partie verticale (7) de l'élément (5) et l'autre bout (13) du vérin (11) étant articulé à un arbre essentiellement horizontal (14), disposé entre les parois latérales (1, 2) dans la partie arrière du dispositif de traction.

4. Dispositif de traction selon la revendication 1 ou 2, prévu pour être utilisé sur une remorque équipée de freins mécaniques, caractérisé en ce que le raccordement de traction (27) et, de ce fait, l'élément (24) sur lequel le raccordement de traction est disposé, sont agencés pour influer sur un élément pivotant (25) qui est à son tour prévu pour être relié à un organe exerçant une action mécanique sur les freins de la remorque.

5. Dispositif de traction selon la revendication 4, caractérisé en ce que l'élément pivotant (25) est fixé sur un arbre essentiellement horizontal (31), disposé entre les parois latérales (1, 2), et que l'élément (25) comporte, sur un coté de l'arbre (31), une partie inférieure oblongue (32) pour venir en contact avec une partie angulaire (30) de l'élément en forme de levier coudé (24) entre sa partie supérieure (26) et inférieure (28), et, sur l'autre côté de l'arbre (31), une partie saillante vers le haut (33) qui est agencée pour être reliée à l'organe exerçant une action mécanique sur les freins de la remorque.

6. Dispositif de traction salon la revendication 5, caractérisé en ce que, lorsque le véhicule recula, l'élément en forme de levier coudé (24) est amené à pivoter en sens inverse horaire autour du premier arbre (29) et influe sur l'élément pivotant (25) afin de le faire tourner en sens horaire autour du second arbre (31), la démultiplication entre les mouvements des deux éléments (24, 25) pouvant être variée en modifiant la partie angulaire (30) du premier élément (24) et les parties saillantes (32, 33) du second élément (25).

7. Dispositif de traction selon l'une quelconque des revendications précédentes, prévu pour être fixé sur l'attelage (15) d'une ramorque, caractérisé en ce que la fixation est réalisée par des flanges (18, 19) et des moyens d'ancrage (20 à 23).
